# EUROPÄISCHE PATENTSCHRIFT

(11) **EP 1 750 220 B1**
(45) Veröffentlichungstag und Bekanntmachung des Hinweises auf die Patenterteilung: **16.04.2008**
(21) Anmeldenummer: 05107239.5
(22) Anmeldetag: 05.08.2005
(51) Int. Cl.: G06Q 10/00

(54) **Verfahren und System zur Erstellung und zur automatisierten Überprüfung von elektronischen Tickets**
Method and system for the creation and automatised check of an electronic ticket
Procédé et système pour la création et le control automatique d'un billet électronique

(43) Veröffentlichungstag der Anmeldung: 07.02.2007
(73) Patentinhaber: Swisscom AG, 3050 Bern (CH)
(72) Erfinder: Straumann, Hugo, 4653, Obergösgen (CH); Grob, Reto, 3008, Bern (CH)
(74) Vertreter: BOVARD AG

(56) Entgegenhaltungen:
- EP-A- 1 104 973
- EP-A- 1 318 470
- EP-A- 1 513 121
- EP-A- 1 553 510
- STRÖMMER ET ALL: "physical browsing for ambient intelligence"[Online] 19. Oktober 2004 (2004-10-19), XP002351772 Gefunden im Internet: URL:http://www.vtt.fi/tte/proj/pb-ami/semi naari/PB-AmI-seminaari-Oct_2004_Strommer.p df> [gefunden am 2005-10-28]

## Beschreibung

### Technisches Gebiet

Die vorliegende Erfindung betrifft ein Verfahren und ein System zur Erstellung und zur automatisierten Überprüfung von elektronischen Tickets.

### Stand der Technik

Im Stand der Technik werden Tickets wie Fahrscheine oder Eintrittskarten an einem Schalter oder an einer Ticket-Maschine bezogen. Der Benutzer spezifiziert beispielsweise eine Fahrstrecke oder einen Sitzplatz und erhält gegen Bezahlung mit Bargeld oder Kreditkarte ein entsprechendes Ticket. Das Ticket kann beispielsweise einen Aufdruck über die Fahrstrecke, eine Gültigkeitsdauer, ein Gültigkeitsdatum oder eine Spezifikation eines Sitzplatzes umfassen. Das Ticket kann zudem Sicherheitsmerkmale wie spezielle Strukturen oder Mikroaufdrucke umfassen. Das Ticket wird beispielsweise durch eine Aktivierungsmaschine mittels des Aufdrucks von Ort, Datum und/oder Zeit aktiviert und durch einen Kontrolleur durch Lochen oder Zerreissen entwertet, wodurch das Ticket aufgebraucht wird. Ein Nachteil solcher Tickets ist der grosse Systemaufwand, welcher für die Erzeugung, Verteilung und Kontrolle solcher Tickets erforderlich ist. In neuerer Zeit können Tickets auch über das Internet bezogen werden. Ein Benutzer spezifiziert dabei eine Fahrstrecke oder einen Sitzplatz und erhält nach elektronischer Bezahlung, wie beispielsweise der Bezahlung mit einer Kreditkarte, ein elektronisches Dokument zugestellt, welches der Benutzer auf einem persönlichen Drucker als ausgedrucktes Ticket ausdruckt. Ein ausgedrucktes Ticket kann einen Code umfassen. Bei der Kontrolle eines solchen Tickets wird dieser Code mittels einer Datenverbindung mit einem Zentralrechner überprüft. Es ist ein Nachteil, dass beispielsweise für Eisenbahnen eine solche Datenverbindung kostspielig ist und zudem unzuverlässig sein kann. Ein ausgedrucktes Ticket kann eine ausgedruckte zweidimensionale Struktur umfassen. Mittels einer Lesevorrichtung wie beispielsweise einer Leseschablone können in dieser zweidimensionalen Struktur verborgene Informationen wie beispielsweise Personenangaben oder Fahrstreckenangaben sichtbar gemacht werden und so die Gültigkeit des Tickets überprüft werden. Es ist ein Nachteil, dass zur Kontrolle eine Lesevorrichtung benötigt wird und dass die Kontrolle je nach Lichtverhältnissen oder Druckqualität langwierig sein kann. Es ist ein Nachteil, dass der Benutzer zur Identifikation einen Personalausweis mitführen muss.

In der Patentanmeldung EP 1 235 188 werden Transponder zur Abspeicherung von elektronischen Billetten sowie Einstiegs- und Durchgangsbereiche zur Erfassung von auf den Transponder abgespeicherten elektronischen Daten beschrieben, wobei mit der beschriebenen Anordnung der Zustieg oder Ausstieg einer Person in oder aus einen Zug oder Bus detektierbar ist. Es werden zusätzliche, im Passagierraum angebrachte Lesegeräte für die Überwachung der elektronischen Billette beschrieben. Die Abrechung der Fahrten erfolgt nach einer Übermittlung von im Zug oder Bus erfassten Fahrdaten an ein zentrales Abrechnungssystem. Es ist ein Nachteil, dass für die Abrechnung von Fahrten Fahrdaten an ein zentrales System übermittelt werden müssen. Es ist ein Nachteil, dass Fehler bei der Detektion des Zustiegs oder des Ausstiegs einer Person zu einer falschen Abrechnung von Fahrten führt.

In der Patentanmeldung EP 1 104 973 wird ein Verfahren zur Überprüfung der Berechtigung für den Bezug eines Services beschrieben. Ein token wird auf ein Mobilgerät übertragen. Mittels eines Verfikationssystems wird der token beim Bezug des Services überprüft. Der token kann zwischen dem Mobilgerät und dem Verifikationssystem über eine drahtlose Schnittstelle übertragen werden. Das Verifikationssystem kann als stand-alone System ausgeführt sein.

In der Patentanmeldung EP 1 553 510 wird ein System zur Übertragung von elektronischen Werten beschrieben. Elektronische Werte wie Tickets, elektronische Bücher oder Pässe können von einem Computer oder einem Mobilgerät verwaltet und über eine drahtlose Schnittstelle an eine IC-Karte (IC: Integrated Circuit) übertragen werden.

In der Patentanmeldung EP 1 513 121 wird ein Verfahren zur Abspeicherung eines elektronischen Tickets auf einem Mobilgerät beschrieben. Das elektronische Ticket kann durch formale Ticketdaten und durch provisorische Ticketdaten gebildet sein, wobei die formalen Ticketdaten in einem gesicherten Bereich des Mobilgeräts, wie z.B. einer IC-Karte, abgespeichert werden und wobei die provisorischen Ticketdaten in einem beliebigen Bereich des Mobilgeräts abgespeichert werden. Mittels der formalen Ticketdaten wird eine Authentisierung durchgeführt und mittels der provisorischen Ticketdaten können zusätzliche Informationen, wie z.B. Ort der Veranstaltung, ähnliche Veranstaltungen, Ausfall der Veranstaltung, abgespeichert werden.

In der Patentanmeldung EP 1 318 470 wird ein System beschrieben um elektronische Information, wie z.B. ein elektronisches Ticket, von einem Transmitter zu einem Receiver zu übertragen. Mittels des Systems kann elektronische Information sowohl nach einer Authentisierung durch den Benutzer als auch ohne Authentisierung durch den Benutzer übertragen werden.

In der Präsentation "Physical Browsing for Ambient Intelligence Enablig technologies", Eskl Strömmer, VTT Electronics, Oulu, werden drahtlose Schnittstellen wie z.B. RFID (RFID: Radio Frequency Identification), NFC (NFC: Near Field Communication) und IrDA (Infrared Data Association) beschrieben. Mittels solcher Schnittstellen können Daten zwischen einem Mobilgerät und der Umgebung ausgetauscht werden.

### Offenbarung der Erfindung

Es ist eine Aufgabe der vorliegenden Erfindung, ein neues Verfahren und ein neues System zur Erstellung und zur automatisierten Überprüfung von elektronischen Tickets vorzuschlagen, welche nicht die Nachteile des Standes der Technik aufweisen.

Gemäss der vorliegenden Erfindung werden diese Ziele insbesondere durch die Elemente der unabhängigen Ansprüche erreicht. Weitere vorteilhafte Ausführungsformen gehen ausserdem aus den abhängigen Ansprüchen und der Beschreibung hervor.

Insbesondere werden diese Ziele durch die Erfindung dadurch erreicht, dass Benutzerdaten in einer Benutzerdatenbank eines Ticket-Servers abgespeichert werden, wobei die Benutzerdaten mindestens eine Identifikation eines Mobilendgeräts eines Benutzers umfassen, dass Diensterbringungsdaten in einer Dienstdatenbank des Ticket-Servers abgespeichert werden, dass mit tels des Ticket-Servers ein elektronisches Ticket erstellt und entsprechend der Identifikation des Mobilendgeräts des Benutzers auf das Mobilendgerät des Benutzers übertragen sowie dort abgespeichert wird, wobei das elektronische Ticket auf Benutzerdaten der Benutzerdatenbank und/oder auf Diensterbringungsdaten der Dienstdatenbank basiert, dass dem elektronischen Ticket ein elektronischer Kontrollschlüssel zugeordnet wird und dass der elektronische Kontrollschlüssel auf einem Mobilendgerät eines Kontrolleurs abgespeichert wird, und dass das auf dem Mobilendgerät des Benutzers abgespeicherte elektronische Ticket durch das Mobilendgerät des Kontrolleurs überprüft wird, wobei die Überprüfung mittels einer Datenübertragung über eine Near-Field-Communications-Schnittstelle zwischen dem Mobilendgerät des Benutzers und dem Mobilendgerät des Kontrolleurs sowie mittels des auf dem Mobilendgerät des Kontrolleurs abgespeicherten elektronischen Kontrollschlüssels erfolgt. Ein solches Verfahren hat den Vorteil, dass die automatisierte Überprüfung eines elektronischen Tickets ermöglicht wird. Das Verfahren hat insbesondere den Vorteil, dass die Überprüfung eines elektronischen Tickets zuverlässig und zeitsparend durchgeführt werden kann. Das Verfahren hat insbesondere den Vorteil, dass für die Überprüfung des elektronischen Tickets keine Kommunikationsverbindung zu einem externen System notwendig ist.

Erfindungsgemäss wird das auf dem Mobilendgerät des Benutzers abgespeicherte elektronische Ticket vor der Überprüfung durch das Mobilendgerät des Kontrolleurs mittels eines Ticket-Aktivators durch Hinzufügen von Orts-, Datums- und/oder Zeitangaben aktiviert. Eine solche Ausführungsvariante hat den Vorteil, dass das elektronische Ticket vom Benutzer einer Verwendung entsprechend aktiviert werden kann. Eine solche Aktivierung kann beispielsweise auf dem Bahnsteig vor dem Besteigen eines Zugs erfolgen. Die Aktivierung umfasst beispielsweise das dem elektronischen Ticket zugeordnete Abspeichern von Orts-, Datums- und/oder Zeitdaten.

In einer anderen Ausführungsvariante wird mittels eines Standortmoduls ein Standort ermittelt sowie auf dem Mobilendgerät des Kontrolleurs abgespeichert und der abgespeicherte Standort des Mobilendgeräts des Kontrolleurs wird zur Überprüfung des auf dem Mobilendgerät des Benutzers abgespeicherten elektronischen Tickets verwendet. Eine solche Ausführungsvariante hat insbesondere den Vorteil, dass die Kontrolle des elektronischen Tickets vollständig automatisiert in Bezug auf eine aktuelle Fahrstrecke durchgeführt werden kann. So kann der Kontrolleur beispielsweise jeweils bei der Zugsabfahrt den Standort neu ermitteln und so beispielsweise die aktuelle Fahrstrecke auf das Mobilendgerät des Kontrolleurs laden. Damit kann eine Überprüfung eines elektronischen Tickets immer in Bezug auf die aktuelle Fahrstrecke durchgeführt werden.

In einer weiteren Ausführungsvariante wird das elektronische Ticket mittels eines kryptographischen Verfahrens vor unerlaubter Modifikation und/oder vor unerlaubtem Zugriff geschützt. Eine solche Ausführungsvariante hat insbesondere den Vorteil, dass das elektronische Ticket fälschungssicher ausgestaltet werden kann.

In einer anderen Ausführungsvariante umfasst das elektronische Ticket eine Identifikation, sodass das elektronische Ticket nur auf einem bestimmbaren Mobilendgerät und/oder über eine bestimmbare Near-Field-Communications-Schnittstelle verwendbar ist. Eine solche Ausführungsvariante hat insbesondere den Vorteil, dass das elektronische Ticket nur von einem bestimmten Mobilendgerät oder nur über eine bestimmte Near-Field-Communications-Schnittstelle verwendbar ist und somit bei einer Übertragung an ein anderes Mobilendgerät nicht weiter benutzbar ist.

In einer weiteren Ausführungsvariante wird bei der Übertragung des elektronischen Tickets an das Mobilendgerät des Benutzers ein Geldbetrag von einem Geldbetragskonto des Benutzers auf ein Geldbetragskonto eines Dienstleistungserbringer übertragen. Eine solche Ausführungsvariante hat insbesondere den Vorteil, dass Geldbeträge automatisiert abbuchbar sind.

### Kurze Beschreibung der Zeichnungen

Nachfolgend werden Ausführungsvarianten der vorliegenden Erfindung anhand von Beispielen beschrieben. Die Beispiele der Ausführungen werden durch folgende beigelegten Figuren illustriert:
Figur 1 zeigt ein Blockdiagramm eines erfindungsgemässen Ticket-Servers.
Figur 2 zeigt ein Blockdiagramm eines erfindungsgemässen Ticket-Aktivators.
Figur 3 zeigt ein Blockdiagramm einer erfindungsgemässen Überprüfung eines elektronischen Tickets.

### Ausführungsform(en) der Erfindung

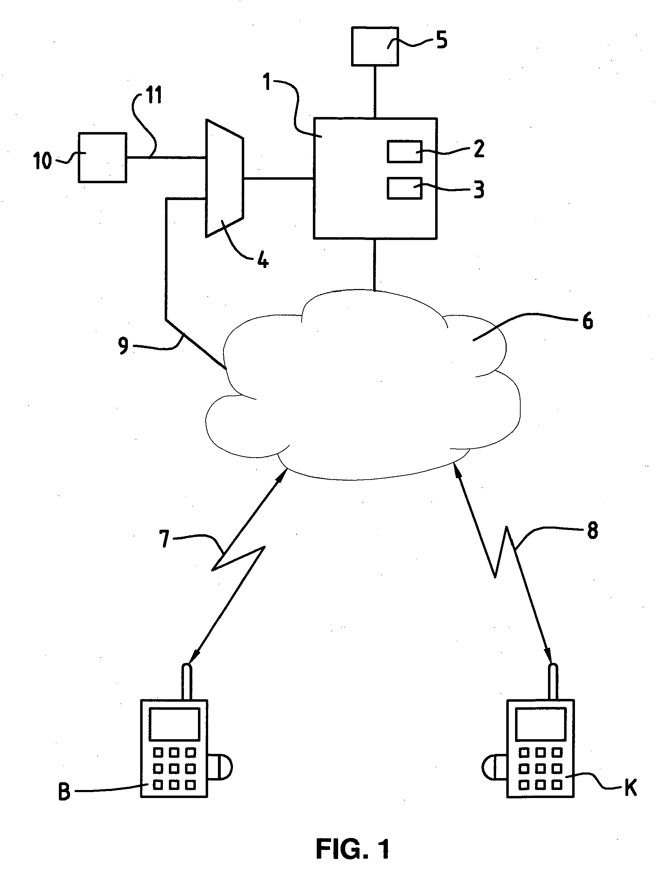

Figur 1 illustriert ein erfindungsgemässes System zur Erstellung eines elektronischen Tickets. Das Bezugszeichen 1 in Figur 1 bezieht sich auf einen Ticket-Server. Der Ticket-Server 1 umfasst eine Benutzerdatenbank 2 mit Benutzerdaten. Die Benutzerdatenbank 2 umfasst Einträge mit Benutzerangaben. Benutzerangaben können beispielsweise anonymisiert abgespeichert sein, indem einem Benutzer eine eindeutige Benutzeridentifikation zugeordnet wird und keine persönlichen Daten des Benutzers abgespeichert werden. Die Einträge der Benutzerdatenbank 2 können aber auch Name, Adresse, Wohnort, Alter oder irgendwelche andere Benutzerangaben umfassen. Die Benutzerangaben können insbesondere einen Kontostand oder Angaben über eine Zahlungsmethode wie beispielsweise Angaben über eine Kreditkarte umfassen. Die Benutzerangaben umfassen eine Identifikation eines Mobilendgeräts eines Benutzers. Eine solche Identifikation kann beispielsweise eine Rufnummer, eine MSISDN (Mobile Station Integrated Services Digital Network) oder irgendwelche andere Angaben zur Identifikation des Mobilendgeräts des Benutzers umfassen. Der Ticket-Server 1 umfasst eine Dienstdatenbank 3 mit Diensterbringungsdaten. Diensterbringungsdaten können sich beispielsweise auf die Benutzung von Verkehrsmitteln wie Eisenbahnen oder Bussen oder auf die Teilnahme an Veranstaltungen wie Konzerten oder Theateraufführungen beziehen. Diensterbringungsdaten können beispielsweise eine Fahrstrecke zwischen zwei Bahnstationen sowie ein Gültigkeitsdatum umfassen. Diensterbringungsdaten können sich auch auf einen geographischen Raum wie beispielsweise eine Stadtagglomeration oder ein Land sowie ein Gültigkeitsintervall, wie beispielsweise ein Startdatum und ein Enddatum, welches einen Monat oder ein Jahr umfasst, beziehen. Mit anderen Worten können mit den Diensterbringungsdaten ein Streckenfahrschein, eine Monatskarte, eine Mehrfahrtenkarte, irgendein anderer Fahrschein oder irgendein anderes Ticket spezifiziert werden. Der Ticket-Server 1 umfasst Module zur Zuordnung von Diensterbringungsdaten zu Benutzerdaten, zur Erzeugung eines elektronischen Tickets, zur Übertragung eines elektronischen Tickets an ein Mobilendgerät oder zur Durchführung irgendwelcher der nachfolgend beschriebenen Funktionen. Solche Module können sowohl als Hardwaremodule als auch als auf einem Mikroprozessor ablauf fähige Softwaremodule implementiert sein. In Figur 1 bezieht sich das Bezugszeichen 5 auf ein Abrechnungsmodul. Das Abrechnungsmodul 5 kann beispielsweise wie in Figur 1 dargestellt als externes Modul ausgeführt sein, welches über eine Kommunikationsverbindung mit dem Ticket-Server verbunden werden kann. Das Abrechnungsmodul 5 kann aber beispielsweise auch im Ticket-Server 1 angebracht sein. Mit dem Abrechnungsmodul 5 werden Diensterbringungsdaten, welche Benutzerdaten zugeordnet werden, einem Benutzerkonto belastet. Mit anderen Worten wird mit dem Abrechnungsmodul 5 ein Geldbetrag von einem Benutzerkonto auf ein Konto eines Diensterbringers übertragen, wobei der Geldbetrag in einem Zusammenhang mit den Diensterbringungsdaten steht, sodass beispielsweise für eine kurze Fahrstrecke ein kleinerer Geldbetrag übertragen wird als beispielsweise für eine Jahreskarte eines Streckennetzes. In Figur 1 bezieht sich das Bezugszeichen 4 auf ein Eingabe-Interface. Mit dem Eingabe-Interface 4 lassen sich Benutzereingaben an den Ticket-Server übermitteln. Solche Benutzereingaben können beispielsweise eine Benutzeridentifikation und Diensterbringungsdaten umfassen. Wie in Figur 1 gezeigt, kann das Eingabe-Interface 4 über eine Mobilfunknetzwerk-Verbindung 9 mit einem Mobilfunknetzwerk verbunden sein. Damit lassen sich Benutzereingaben beispielsweise von einem Mobilendgerät an den Ticket-Server übermitteln. Wie in Figur 1 gezeigt, kann das Eingabe Interface 4 über eine Eingabeeinheit-Verbindung 11 mit einer Eingabeeinheit 10 verbunden sein. Die Eingabeeinheit 10 kann sich beispielsweise auf einen Personal Computer beziehen, welcher am Internet angeschlossen ist. Dementsprechend kann sich die Eingabeeinheit-Verbindung 11 auf eine Internet-Verbindung wie beispielsweise eine TCP/IP-Verbindung (TCP: Transfer Control Protocol, IP: Internet Protocol) zwischen der Eingabeeinheit 10 und dem Eingabe-Interface 4 beziehen. Selbstverständlich kann das Eingabe-Interface 4 über weitere Verbindungsmöglichkeiten verfügen, um irgendwelche Geräte zur Eingabe von Benutzereingaben anzuschliessen und um die durch diese Geräte erzeugten Benutzereingaben an den Ticket-Server 1 zu übermitteln. So kann das Eingabe-Interface 4 beispielsweise auch Verbindungen zu einem PSTN (Public Switched Telephone Network) umfassen, sodass mittels an diesem PSTN Netzwerk angeschlossenen Telefonapparaten beispielsweise eine sprachgesteuerte Übertragung von Benutzereingaben an den Ticket-Server ermöglicht wird. Mittels des Eingabe-Interface 4 kann insbesondere auch eine bidirektionale Verbindung zwischen einem Gerät zur Eingabe von Benutzereingaben und dem Ticket-Server 1 erstellt werden, sodass Benutzereingaben mittels eines Menusystems des Ticket-Servers 1 durchgeführt werden können. So kann ein Benutzer Benutzereingaben auslösen und mit solchen Benutzereingaben das nachfolgend beschriebene Verfahren zum Erstellen und zum automatisierten Überprüfen eines elektronischen Tickets auslösen. In Figur 1 bezieht sich das Bezugszeichen B auf ein Mobilendgerät eines Benutzers. Das Mobilendgerät B des Benutzers kann beispielsweise ein Mobilfunktelefon, ein PDA (Personal Digital Assistant), ein portables Notebook oder irgendein anderes Mobilendgerät sein. In Figur 1 bezieht sich das Bezugszeichen K auf ein Mobilendgerät eines Kontrolleurs. Das Mobilendgerät K des Kontrolleurs kann wie das Mobilendgerät B des Benutzers irgendein geeignetes Mobilendgerät sein. Bevorzugt handelt es sich beim Mobilendgerät K des Kontrolleurs um ein Mobilendgerät mit besonders portablen Eigenschaften, wie beispielsweise ein Mobilfunktelefon. Das Mobilendgerät B des Benutzers und das Mobilendgerät K des Kontrolleurs umfassen kompatible Near-Field-Communications-Schnittstellen (NFC-Schnittstellen). Die NFC-Schnittstellen sind derart ausgestaltet, dass eine Datenübertragung zwischen dem Mobilendgerät B des Benutzers und dem Mobilendgerät K des Kontrolleurs ermöglicht wird, sobald die NFC-Schnittstellen genügend nahe beieinander angeordnet sind. So können die NFC-Schnittstellen derart ausgestaltet sein, dass eine Datenübertragung nur dann möglich ist, wenn das Mobilendgerät B des Benutzers und das Mobilendgerät K des Kontrolleurs in einem Abstand von beispielsweise 0-10cm, d.h. sehr nahe beieinander, angeordnet sind. Solche NFC-Schnittstellen sind unter anderem als RFID-Schnittstellen (RFID: Radio Frequency Identification) bekannt. Selbstverständlich können auch andere Technologien eingesetzt werden wie beispielsweise eine Bluetooth-Technologie.

Über das Eingabe-Interface 4 sowie geeignete Eingabegeräte kann der Benutzer die Erstellung eines elektronischen Tickets auf dem Ticket-Server auslösen. Dazu werden Angaben über den Benutzer sowie Angaben über Diensterbringungsdaten an den Ticket-Server übermittelt. Eine Übermittlung solcher Angaben kann gemäss dem Stand der Technik entsprechend unterschiedlicher Varianten ausgestaltet sein. So kann der Benutzer auf dem Mobilendgerät B des Benutzers beispielsweise eine SMS-Meldung (SMS: Short Messages System) mit den Angaben eines Ausgangsorts und eines Zielorts erstellen und an eine dem Eingabe-Interface zugeordnete Mobilfunknummer übermitteln, wobei das Eingabe-Interface diese SMS-Meldung empfängt und zusammen mit Angaben über den Sender der SMS-Meldung an den Ticket-Server zur Auswertung übermittelt. Der Ticket-Server empfängt so Angaben über einen Benutzer (Sender der SMS-Meldung) und Angaben über Diensterbringungsdaten (Ausgangsort und Zielort). Selbstverständlich können solche Angaben beispielsweise basierend auf einer GPRS-Verbindung (GPRS: General Packet Radio Service) oder einer HSCD-Verbindung (HSCD: High Speed Circuit Switched Data) sowie basierend auf Modulen, welche am Mobilendgerät und am Ticket-Server, beispielsweise als Softwaremodule ausgestaltet, angebracht sind, als interaktives, menugeführtes Benutzereingabesystem ausgestaltet sein. Wie erwähnt, können mittels einer Eingabeeinheit 10 oder mittels Sprachmodulen entsprechende interaktive, menugeführte Benutzereingabesysteme vorhanden sein.

Nachdem der Benutzer mittels einer Eingabevorrichtung die Erstellung eines elektronischen Tickets ausgelöst hat, wird durch den Ticket-Server ein elektronisches Ticket erstellt. Das elektronische Ticket kann beispielsweise Angaben über eine Fahrstrecke, über ein Gültigkeitsdatum oder irgendwelche anderen Angaben zur Identifizierung eines Dienstes umfassen. Das elektronische Ticket kann zudem Benutzerdaten wie eine Benutzeridentifikation, einen Benutzernamen oder irgendwelche anderen Angaben über den Benutzer umfassen. Das elektronische Ticket kann also Daten mit Bezug auf einen Dienst und Daten mit Bezug auf einen Benutzer umfassen. Das elektronische Ticket kann zudem eine Verwendungs-Identifikation, beispielsweise eine Identifikation einer NFC-Schnittstelle, umfassen, sodass das elektronische Ticket nur auf einem Gerät mit einer entsprechenden Verwendungs-Identifikation verwendbar ist. Bei der Erstellung des elektronischen Tickets kann dieses vor Missbrauch und/oder Fälschung gesichert werden. Die Sicherung des elektronischen Tickets kann beispielsweise eine Signatur mit einem elektronischen Ticketschlüssel, beispielsweise gemäss einem secret-key Verfahren oder gemäss einem public-key Verfahren, umfassen. Nachdem ein elektronisches Ticket durch den Ticket-Server erstellt wurde, wird das elektronische Ticket an das Mobilendgerät B des Benutzers übertragen. Eine solche Übertragung kann beispielsweise als SMS-Meldung erfolgen, auf einer GPRS-Verbindung basieren oder auf irgendeiner anderen Datenübertragung basieren.

Um das elektronische Ticket zu überprüfen, wird auf das Mobilendgerät K des Kontrolleurs ein entsprechender elektronischer Kontrollschlüssel übermittelt und abgespeichert. Wie noch gezeigt wird, kann sich der elektronische Kontrollschlüssel beispielsweise auf ein secret-key Verfahren oder auf ein public-key Verfahren beziehen.

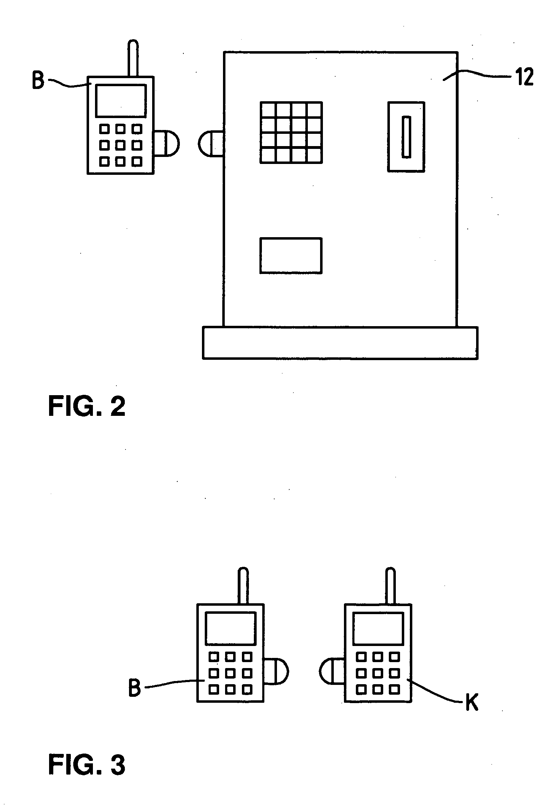

In Figur 2 bezieht sich das Bezugszeichen 12 auf einen Ticket-Aktivator. Der Ticket-Aktivator 12 kann beispielsweise eine NFC-Schnittstelle umfassen. Mittels des Ticket-Aktivators 12 kann ein elektronisches Ticket, welches auf dem Mobilendgerät B des Benutzers abgespeichert ist, aktiviert werden. Für die Aktivierung wird die NFC-Schnittstelle des Mobilendgeräts B des Benutzers in den Wirkungsbereich der NFC-Schnittstelle des Ticket-Aktivators gebracht. Nachdem der Ticket-Aktivator sowie das Mobilendgerät B des Benutzers das gegenseitige Vorhandensein beispielsweise mittels eines NFC-polling und beispielsweise mittels einer gegenseitigen Authentifizierung festgestellt haben, wird beispielsweise das elektronische Ticket über die NFC-Schnittstellen an den Ticket-Aktivator übertragen. Um das elektronische Ticket zu überprüfen, kann gegebenenfalls ein elektronischer Kontrollschlüssel vom Ticket-Server auf den Ticket-Aktivator übertragen werden und für die Überprüfung verwendet werden. Das elektronische Ticket wird anschliessend durch den Ticket-Aktivator mit Aktivierungs-Daten wie beispielsweise der Zeit und dem Ort versehen, wobei das so aktivierte elektronische Ticket vor einer anschliessenden Modifikation gesichert wird, beispielsweise mittels eines elektronischen Aktivierungsschlüssels, und nach einer solchen Modifikations-Sicherung über die NFC-Schnittstellen an das Mobilendgerät B des Benutzers übertragen und dort abgespeichert wird. In einer anderen Variante ist der Ticket-Aktivator so ausgeführt, dass nur ein Datum, Zeit und Ort für die entsprechende Ausgabestelle vom Ticket-Aktivator auf das Mobilendgerät B des Benutzers übertragen wird. Dabei können Datum, Zeit und Ort mittels einer Signierung oder einer Verschlüsselung vor einer nachfolgenden Veränderung geschützt werden, beispielsweise mittels eines public key Verfahrens. Die Aktivierung bzw. die Zeitstempel werden auf dem Mobilendgerät angezeigt, wobei dies einem auf ein Ticket angebrachtem Stempel entspricht. Ein Kontrolleur verifiziert das Ticket durch Überprüfung von Strecke und Aktivierung. Es kann auch die Chronologie für allfällige Unstimmigkeiten zurückverfolgt werden.

In Figur 3 bezieht sich das Bezugszeichen B auf das Mobilendgerät des Benutzers und das Bezugszeichen K auf das Mobilendgerät des Kontrolleurs. Mittels des Mobilendgeräts K des Kontrolleurs kann ein elektronisches Ticket, welches auf dem Mobilendgerät B des Benutzers abgespeichert ist, aktiviert werden. Für die Kontrolle des elektronischen Tickets werden die NFC-Schnittstellen des Mobilendgeräts B des Benutzers und des Mobilendgeräts K des Kontrolleurs in einen gegenseitigen Wirkungsbereich gebracht, d.h. die NFC-Schnittstellen werden so nahe zueinander gebracht, dass eine Datenübertragung über die NFC-Schnittstellen ermöglicht wird. Bevorzugt erfolgt eine Datenübertragung bei einer Distanz zwischen den NFC-Schnittstellen von 0 cm bis 10 cm. Das gegenseitige Vorhandensein des Mobilendgeräts B des Benutzers und des Mobilendgeräts K des Kontrolleurs kann beispielsweise mittels eines NFC-polling detektiert werden. Sobald beispielsweise das Mobilendgerät K des Kontrolleurs das Vorhandensein des Mobilendgeräts B des Benutzers detektiert, kann das Mobilendgerät K des Kontrolleurs eine Aufforderung zur Übermittlung des elektronischen Tickets an das Mobilendgerät B des Benutzers senden. Das Mobilendgerät B des Benutzers übermittelt anschliessend das elektronische Ticket an das Mobilendgerät K des Kontrolleurs, wobei das elektronische Ticket mittels des elektronischen Kontrollschlüssels überprüft wird. Die Überprüfung des elektronischen Tickets kann zudem die Überprüfung einer Identifikation der NFC-Schnittstelle des Mobilendgeräts B des Benutzers sowie die Überprüfung des aktuellen Standorts des Mobilendgeräts K des Kontrolleurs umfassen.

Nachfolgend werden die obigen Beschreibungen anhand eines Beispiels weiter erläutert. Wie schon beschrieben, besteht das erfindungsgemässe Verfahren insbesondere aus der Erstellung eines elektronischen Tickets, einer allfälligen Aktivierung des elektronischen Tickets und einer Überprüfung des elektronischen Tickets.

Dabei seien auf dem Ticket-Server beispielsweise ein private key d und ein public key e eines public key Verschlüsselungsverfahrens abgespeichert. Der public key e wird zudem an das Mobilendgerät K des Kontrolleurs (bzw. an eine Vielzahl solcher Mobilendgeräte) übermittelt, beispielsweise durch das Senden einer SMS-Meldung an das Mobilendgerät K des Kontrolleurs. Der private key d und/oder der public key e wird beispielsweise zudem auf einem oder mehreren Ticket-Aktivatoren installiert. Alternativ ist ein Ticket-Aktivator über eine Kommunikationsverbindung, beispielsweise über eine PSTN-Verbindung, mit dem Ticket-Server verbindbar, womit der Zugriff des Ticket-Aktivators auf den private key d und/oder den public key e ebenfalls gewährleistet ist.

Aus auf dem Ticket-Server abgespeicherten Benutzerdaten und/oder Diensterbringungsdaten wird ein elektronisches Ticket T zusammengestellt, sodass das elektronische Ticket beispielsweise eine NFC-Schnittstellen-Identifikation, eine Fahrstrecke mit einem Startort und einem Zielort und ein Gültigkeitsdatum umfasst. Ein elektronisches Ticket kann beispielsweise aus codierten Daten zusammengestellt werden. Beispielsweise kann eine Fahrstrecke als Fahrstreckenliste aufgebaut sein, wobei Streckencodes von Fahrstrecken zwischen dem Startort und dem Zielort der Fahrstrecke in dieser Fahrstreckenliste zusammengestellt werden. Ein elektronisches Ticket umfasst eine bestimmte Datenmenge und kann beispielsweise nur etwa hundert Bytes umfassen. Mittels des private key d wird das elektronische Ticket T zu einem verschlüsselten elektronischen Ticket d(T) verschlüsselt. Bei Bedarf kann das elektronische Ticket T zudem mit einem Kompressionsalgorithmus komprimiert werden oder das verschlüsselte elektronische Ticket kann in eine geeignete Datendarstellung wie beispielsweise eine ASCII Textdatendarstellung abgebildet werden. Das verschlüsselte elektronische Ticket d(T) wird anschliessend beispielsweise als SMS-Meldung an das Mobilendgerät B des Benutzers über mittelt und dort abgespeichert, womit beispielsweise die Erstellung des elektronischen Tickets abgeschlossen ist.

Die Aktivierung eines elektronischen Tickets hat den Zweck, dass der Benutzer den Zeitpunkt der Verwendung des elektronischen Tickets, allenfalls innerhalb einer einem Gültigkeitsenddatum entsprechenden Frist, selbständig festlegen kann. Dazu ist auf dem Mobilendgerät B des Benutzers ein Aktivierungsmodul angebracht. Die Aktivierung erfolgt beispielsweise bei einer Annäherung der NFC-Schnittstelle des Mobilendgeräts zu einer NFC-Schnittstelle eines Ticket-Aktivators. Dabei kontrolliert beispielsweise das Aktivierungsmodul des Mobilendgeräts B des Benutzers in regelmässigen Zeitabständen, ob eine NFC-Schnittstelle eines Ticket-Aktivators detektierbar ist. Die Unterscheidung zwischen einer NFC-Schnittstelle eines Ticket-Aktivators und einer sonstigen NFC-Schnittstelle kann beispielsweise mittels Identifizierungsdaten der NFC-Schnittstelle des Ticket-Aktivators, also beispielsweise durch eine bestimmte Identifikationsnummer der NFC-Schnittstelle, erfolgen. Selbstverständlich ist es auch möglich, bei einer Abspeicherung von entsprechenden Authentifizierungsdaten auf dem Mobilendgerät des Benutzers und auf dem Ticket-Aktivator, die NFC-Schnittstellen des Mobilendgeräts B des Benutzers und des Ticket-Aktivators gegenseitig zu authentifizieren. Sobald das Aktivierungsmodul des Mobilendgeräts B des Benutzers eine zulässige NFC-Schnittstelle eines Ticket-Aktivators detektiert, kann die Übertragung des verschlüsselten elektronischen Tickets d(T) über die NFC-Schnittstellen vom Mobilendgerät B des Benutzers an den Ticket-Aktivator ausgelöst werden. Auf dem Ticket-Aktivator kann das elektronische Ticket d(T) beispielsweise mit dem private key e entschlüsselt werden, mit Aktivierungsdaten wie beispielsweise Standort, Datum und/oder Zeit zu einem aktivierten Ticket T_{A} ergänzt werden, mit dem public key d zu einem verschlüsselten aktivierten Ticket d(T_{A}) verschlüsselt werden, wobei das verschlüsselte aktivierte Ticket d(T_{A}) über die NFC-Schnittstellen an das Mobilendgerät B des Benutzers übermittelt wird. Damit ist beispielsweise die Aktivierung des elektronischen Tickets T abgeschlossen. Das Mobilendgerät kann dabei so eingerichtet sein, dass der Benutzer seine Tickets über ein Menu auf dem Display des Mobilendgeräts überprüfen kann.

Die Überprüfung des elektronischen Tickets erfolgt beispielsweise bei der Benutzung einer Diensterbringung durch den Benutzer, also beispielsweise bei einer Eisenbahnfahrt des Benutzers von einem Ausgangsort zu einem Zielort. Um eine mehrfache Benutzung desselben elektronischen Tickets zu verhindern, kann der Benutzer wie erwähnt verpflichtet sein, das elektronische Ticket beispielsweise beim Ausgangsort vor dem Antritt der Eisenbahnfahrt zu aktivieren. Das elektronische Ticket oder gegebenenfalls das aktivierte elektronische Ticket wird während der Eisenbahnfahrt des Benutzers durch einen Kontrolleur überprüft. Zur Überprüfung wird eine NFC-Schnittstelle des Mobilendgeräts K des Kontrolleurs in den Wirkungsbereich der NFC-Schnittstelle des Mobilendgeräts B des Benutzers gebracht, wobei die NFC-Schnittstelle des Mobilendgeräts B des Benutzers durch ein Überprüfungsmodul des Mobilendgeräts K des Kontrolleurs detektiert wird. Sobald eine solche Detektion erfolgt ist, kann beispielsweise durch die Aktivierung geeigneter Module des Mobilendgeräts K des Kontrolleurs und des Mobilendgeräts B des Benutzers eine Kommunikationsverbindung über die NFC-Schnittstellen aktiviert werden. Anschliessend wird durch das Mobilendgerät K des Kontrolleurs eine Aufforderung zur Übertragung eines elektronischen Tickets an das Mobilendgerät B des Benutzers übertragen. Eine solche Aufforderung kann aus einem üblichen send request des Überprüfungsmoduls des Mobilendgeräts K des Kontrolleurs an ein entsprechendes Modul des Mobilendgeräts B des Benutzers erfolgen. Das verschlüsselte und gegebenenfalls aktivierte elektronische Ticket wird anschliessend an das Mobilendgerät K des Kontrolleurs übertragen. Mittels des auf dem Mobilendgerät K des Kontrolleurs abgespeicherten public key e wird das verschlüsselte elektronische Billett d(T) entschlüsselt. Das elektronische Ticket T wird anschliessend durch das Überprüfungsmodul des Mobilendgeräts K des Kontrolleurs überprüft. Eine solche Überprüfung bezieht sich beispielsweise auf ein Gültigkeitsdatum, das nicht überschritten sein darf, auf eine Fahrstrecke, welche mit der aktuellen Fahrstrecke übereinstimmen muss und/oder auf Aktivierungsdaten, welche vorhanden sein müssen und sich beispielsweise auf einen gültigen Zeitpunkt beziehen müssen. So wird also überprüft, ob das aktuelle Datum noch innerhalb des Gültigkeitsdatums des elektronischen Tickets ist oder ob der Aktivierungszeitpunkt des elektronischen Tickets nicht mehr als ein bestimmtes Zeitintervall wie beispielsweise 2 Stunden zurückliegt. Für die Überprüfung der Fahrstrecke kann das Mobilendgerät K des Kontrolleurs zudem über ein Fahrstreckenmodul verfügen. Das Fahrstreckenmodul kann so eingerichtet sein, dass beispielsweise bei der Abfahrt des Zuges über die NFC-Schnittstelle des Mobilendgeräts K des Kontrolleurs und über eine am Zug angebrachte NFC-Schnittstelle die aktuelle Fahrstrecke des Zuges auf das Mobilendgerät K des Kontrolleurs geladen wird. Dabei kann das Fahrstreckenmodul so eingerichtet sein, dass der Kontrolleur über die am Zug angebrachte NFC-Schnittstelle und eine entsprechende im Zug angebrachte Kommunikationsverbindung zum Führerstand des Zugs zuerst eine Abfahrtsbestätigung an den Zugführer gesendet werden muss, welche vom Zugführer bei der Abfahrt durch die Angabe der aktuellen Fahrstrecke quittiert wird.

In einer anderen Ausführungsvariante werden die Tickets nicht vollständig verschlüsselt, sondern nur Teile davon. Die Tickets werden jedoch beispielsweise mittels eines public key Verfahrens signiert, sodass der Inhalt der Tickets (Fahrstrecke, Datum, ...) gelesen werden kann. Dieser Inhalt kann jedoch nicht verändert werden, ohne dass das Ticket ungültig wird.

Die Überprüfung eines elektronischen Tickets durch den Kontrolleur kann automatisiert und sehr schnell ablaufen. Dazu hält der Kontrolleur die NFC-Schnittstelle des Mobilendgeräts K des Kontrolleurs an die NFC-Schnittstelle des Mobilendgeräts B des Benutzers. Sobald die Überprüfung des elektronischen Tickets wie oben beschrieben abgeschlossen ist, kann das Resultat der Überprüfung durch die Anzeige einer Meldung auf einem Display des Mobilendgeräts, durch ein Tonsignal oder durch ein Vibrationssignal des Mobilendgeräts dem Kontrolleur mitgeteilt werden. Dazu kann beispielsweise ein intervallartiges Vibrationssignal verwendet werden, wobei ein kurzer Intervallabstand bedeutet, dass es sich um ein gültiges elektronisches Ticket handelt und wobei ein langer Intervallabstand bedeutet, dass es sich um ein ungültiges elektronisches Ticket handelt.

Bei der Erstellung eines elektronischen Tickets kann auf dem Ticket-Server zudem ein Archiv der erstellten elektronischen Tickets nachgeführt werden. So kann beispielsweise ein elektronisches Ticket, welches durch den Verlust des Mobilendgeräts B des Benutzers verloren geht, mit kleinem Aufwand wieder rekonstruiert und auf ein Ersatzgerät übermittelt werden.

Die Mittel zur Aktivierung des elektronischen Tickets können beispielsweise auf dem Bahnsteig bei entsprechenden Vorrichtungen zur Aktivierung von Tickets des Standes der Technik angebracht werden.

Es sei schliesslich erwähnt, dass selbstverständlich mehrere Tickets von verschiedenen Ausgabestellen verwaltet werden können. So kann ein Benutzer beispielsweise ein Zugsbillett, ein Trambillett und eine Eintrittskarte für einen Anlass wie einen Fussballmatch bei verschiedenen Ausgabestellen beziehen und so seine benötigten Tickets individuell zusammenstellen. Durch eine Erkennung der Ausgabestelle ist auch ein sehr einfaches Handling für den Benutzer möglich.

## Patentansprüche

1. Verfahren zur Erstellung und zur automatisierten Überprüfung von elektronischen Tickets, wobei Benutzerdaten in einer Benutzerdatenbank (2) eines Ticket-Servers (1) abgespeichert werden, wobei die Benutzerdaten mindestens eine Identifikation eines Mobilendgeräts (B) eines Benutzers umfassen, wobei Diensterbringungsdaten in einer Dienstdatenbank (3) des Ticket-Servers (1) abgespeichert werden, wobei mittels des Ticket-Servers (1) ein elektronisches Ticket erstellt und entsprechend der Identifikation des Mobilendgeräts (B) des Benutzers auf das Mobilendgerät (B) des Benutzers übertragen sowie dort abgespeichert wird, wobei das elektronische Ticket auf Benutzerdaten der Benutzerdatenbank (2) und/oder auf Diensterbringungsdaten der Dienstdatenbank (3) basiert, wobei dem elektronischen Ticket ein elektronischer Kontrollschlüssel zugeordnet wird und wobei der elektronische Kontrollschlüssel auf einem Mobilendgerät (K) eines Kontrolleurs abgespeichert wird, und wobei das auf dem Mobilendgerät (B) des Benutzers abgespeicherte elektronische Ticket durch das Mobilendgerät (K) des Kontrolleurs überprüft wird, wobei die Überprüfung mittels einer Datenübertragung über eine Near-Field-Communications-Schnittstelle zwischen dem Mobilendgerät (B) des Benutzers und dem Mobilendgerät (K) des Kontrolleurs sowie mittels des auf dem Mobilendgerät (K) des Kontrolleurs abgespeicherten elektronischen Kontrollschlüssels erfolgt, **dadurch gekennzeichnet,**
**dass** das auf dem Mobilendgerät (B) des Benutzers abgespeicherte elektronische Ticket vor der Überprüfung durch das Mobilendgerät (K) des Kontrolleurs mittels eines Ticket-Aktivators (12) durch Hinzufügen von Orts-, Datums- und/oder Zeitangaben aktiviert wird

2. Verfahren nach Anspruch 1, **dadurch gekennzeichnet, dass** mittels eines Standortmoduls ein Standort ermittelt wird sowie auf dem Mobilendgerät (K) des Kontrolleurs abgespeichert wird und dass der abgespeicherte Standort des Mobilendgeräts (K) des Kontrolleurs zur Überprüfung des auf dem Mobilendgerät (B) des Benutzers abgespeicherten elektronischen Tickets verwendet wird.

3. Verfahren nach einem der Ansprüche 1 bis 2, **dadurch gekennzeichnet, dass** das elektronische Ticket mittels eines kryptographischen Verfahrens vor unerlaubter Modifikation und/oder vor unerlaubtem Zugriff geschützt wird.

4. Verfahren nach einem der Ansprüche 1 bis 3, **dadurch gekennzeichnet, dass** das elektronische Ticket eine Identifikation umfasst, sodass das elektronische Ticket nur auf einem bestimmbaren Mobilendgerät und/oder über eine bestimmbare Near-Field-Communications-Schnittstelle verwendbar ist.

5. Verfahren nach einem der Ansprüche 1 bis 4, **dadurch gekennzeichnet, dass** bei der Übertragung des elektronischen Tickets an das Mobilendgerät (B) des Benutzers ein Geldbetrag von einem Geldbetragskonto des Benutzers auf ein Geldbetragskonto eines Dienstleistungserbringer übertragen wird.

6. System zur Erstellung und zur automatisierten Überprüfung von elektronischen Tickets, wobei ein Ticket-Server (1) eine Benutzerdatenbank (2) umfasst zur Abspeicherung von Benutzerdaten, wobei die Benutzerdaten mindestens eine Identifikation eines Mobilendgeräts (B) eines Benutzers umfassen, wobei der Ticket-Server (1) eine Dienstdatenbank (3) umfasst zur Abspeicherung von Diensterbringungsdaten,wobei der Ticket-Server (1) Mittel umfasst zur Erstellung eines elektronischen Tickets und zur Übertragung des elektronischen Tickets entsprechend der Identifikation des Mobilendgeräts (B) des Benutzers an dieses Mobilendgerät, wobei das Mobilendgerät (B) des Benutzers Mittel umfasst zur Abspeicherung eines elektronischen Tickets, wobei das elektronische Ticket auf Benutzerdaten der Benutzerdatenbank (2) und/oder auf Diensterbringungsdaten der Dienstdatenbank (3) basiert, wobei ein Mobilendgerät (K) eines Kontrolleurs Mittel umfasst zur Abspeicherung eines elektronischen Kontrollschlüssels, wobei der elektronische Kontrollschlüssel dem elektronischen Ticket zugeordnet ist, wobei das Mobilendgerät (K) des Kontrolleurs Mittel umfasst zur Überprüfung des elektronischen Tickets, wobei die Überprüfung mittels einer Datenübertragung
über eine Near-Field-Communications-Schnittstelle zwischen dem Mobilendgerät (B) des Benutzers und dem Mobilendgerät (K) des Kontrolleurs sowie mittels des auf dem Mobilendgerät (K) des Kontrolleurs abgespeicherten elektronischen Kontrollschlüssels erfolgt, **dadurch gekennzeichnet,**
**dass** ein Ticket-Aktivator (12) Mittel umfasst zur Aktivierung des auf dem Mobilendgerät (B) des Benutzers abgespeicherten elektronischen Tickets mittels Hinzufügen von Orts-, Datums- und/oder Zeitangaben.

7. System nach Anspruch 6, **dadurch gekennzeichnet, dass** ein Standortmodul Mittel umfasst zur Ermittelung eines Standorts, dass das Mobilendgerät (K) des Kontrolleurs Mittel umfasst zur Abspeicherung des ermittelten Standorts und dass das Mobilendgerät (K) des Kontrolleurs Mittel umfasst für eine auf dem ermittelten Standort basierten Überprüfung des auf dem Mobilendgerät (B) des Benutzers abgespeicherten elektronischen Tickets.

8. System nach einem der Ansprüche 6 bis 7, **dadurch gekennzeichnet, dass** das System auf kryptographischen Verfahren basierte Mittel umfasst zum Schutz des elektronischen Tickets vor unerlaubter Modifikation und/oder vor unerlaubtem Zugriff.

9. System nach einem der Ansprüche 6 bis 8, **dadurch gekennzeichnet, dass** das System auf einer Identifikation basierte Mittel umfasst, sodass das elektronische Ticket nur auf einem bestimmbaren Mobilendgerät und/oder über eine bestimmbare Near-Field-Communications-Schnittstelle verwendbar ist.

10. System nach einem der Ansprüche 6 bis 9, **dadurch gekennzeichnet, dass** das System auf der Übertragung des elektronischen Tickets an das Mobilendgerät (B) des Benutzers basierte Mittel umfasst zur Übertragung eines Geldbetrags von einem Geldbetragskonto des Benutzers auf ein Geldbetragskonto eines Dienstleistungserbringer.

## Claims

1. Method for creation and automated checking of electronic tickets, user data being stored in a user database (2) of a ticket server (1), the user data comprising at least an identification of a mobile terminal (B) of a user, service supply data being stored in a service database (3) of the ticket server (1), by means of the ticket server (1), an electronic ticket being prepared and being transmitted to the mobile terminal (B) of the user and being stored there in accordance with the identification of the mobile terminal (B) of the user, the electronic ticket being based on user data of the user database (2) and/or on service supply data of the service database (3), an electronic control key being assigned to the electronic ticket, and the electronic control key being stored on a mobile terminal (K) of a controller, and the electronic ticket stored on the mobile terminal (B) of the user being checked by the mobile terminal (K) of the controller, the checking taking place by means of a data transmission via a Near Field Communication Interface between the mobile terminal (B) of the user and the mobile terminal (K) of the controller as well as by means of the electronic control key stored on the mobile terminal (K) of the controller, **characterised in that**
before the checking by the mobile terminal (K) of the controller, the electronic ticket stored on the mobile terminal (B) of the user is activated by means of a ticket activator (12) by adding place, date and/or time indications.

2. Method according to claim 1, **characterised in that**, by means of a location module, a location is determined and is stored on the mobile terminal (K) of the controller, and **in that** the stored location of the mobile terminal (K) of the controller is used for checking the electronic ticket stored on the mobile terminal (B) of the user.

3. Method according to one of the claims 1 to 2, **characterised in that** by means of a cryptographic method the electronic ticket is protected against unauthorised modification and/or against unauthorised access.

4. Method according to one of the claims 1 to 3, **characterised in that** the electronic ticket comprises an identification so that the electronic ticket is usable only on a definable mobile terminal and/or via a definable Near Field Communication Interface.

5. Method according to one of the claims 1 to 4, **characterised in that** with the transmission of the electronic ticket to the mobile terminal (B) of the user a monetary amount is transmitted from a monetary amount account of the user to a monetary amount account of a service provider.

6. System for creation and automated checking of electronic tickets, a ticket server (1) comprising a user database (2) for storing user data, the user data including at least an identification of a mobile terminal (B) of a user, the ticket server (1) comprising a service database (3) for storing service supply data, the ticket server (1) comprising means for creation of an electronic ticket and for transmission of the electronic ticket to the mobile terminal of the user in accordance with the identification of this mobile terminal (B), the mobile terminal (B) of the user comprising means for storing an electronic ticket, the electronic ticket being based on user data of the user database (2) and/or on service supply data of the service database (3), a mobile terminal (K) of a controller comprising means for storing an electronic control key, the electronic control key being assigned to the electronic ticket, the mobile terminal (K) of the controller comprising means for checking the electronic ticket, the checking taking place by means of a data transmission via a Near Field Communications Interface between the mobile terminal (B) of the user and the mobile terminal (K) of the controller as well as by means of the electronic control key stored on the mobile terminal (K) of the controller, **characterised in that**
a ticket activator (12) comprises means for activation of the electronic ticket stored on the mobile terminal (B) of the user by means of adding place, date and/or time indications.

7. System according to claim 6, **characterised in that** a location module comprises means of determining a location, **in that** the mobile terminal (K) of the controller comprises means of storing the determined location, and **in that** the mobile terminal (K) of the controller comprises means for a checking, on the basis of the determined location, of the electronic ticket stored on the mobile terminal (B) of the user.

8. System according to one of the claims 6 to 7, **characterised in that** the system comprises means based on cryptographic method for protection of the electronic ticket against unauthorised modification and/or unauthorised access.

9. System according to one of the claims 6 to 8, **characterised in that** the system comprises means based on an identification, so that the electronic ticket is usable only on a definable mobile terminal and/or via a definable Near Field Communication Interface.

10. System according to one of the claims 6 to 9, **characterised in that** the system comprises means, based on the transmission of the electronic ticket to the mobile terminal (B) of the user, for transmission of a monetary amount from a monetary amount account of the user to a monetary amount account of a service provider.

## Revendications

1. Procédé pour la création et pour le contrôle automatisé de billets électroniques, des données d'utilisateur étant stockées dans une banque de données d'utilisateur (2) d'un serveur de billets (1), les données d'utilisateur comprenant au moins une identification d'un terminal mobile (B) d'un utilisateur, des données de fournitures de services étant stockées dans une banque de données de serveur (3) du serveur de billet (1), le serveur de billets (1) éditant et transmettant un billet électronique en fonction de l'identification du terminal mobile (B) de l'utilisateur au terminal mobile (B) de l'utilisateur pour y être stockée, le billet électronique étant basé sur des données d'utilisateur de la banque de données d'utilisateur (2) et/ou sur des données de prestations de service de la banque de données de service (3), un billet électronique étant associé à une clé de contrôle électronique et la clé de contrôle électronique étant stockée sur un terminal mobile (K) d'un contrôleur et le billet électronique stocké sur le terminal mobile (B) de l'utilisateur étant vérifié par le terminal mobile (K) du contrôleur, la vérification s'effectuant au moyen d'une transmission de données par une interface de communication en champ proche entre le terminal mobile (B) de l'utilisateur et le terminal mobile (K) du contrôleur ainsi qu'au moyen de la clé de contrôle électronique stockée sur le terminal mobile (K) du contrôleur,
**caractérisé en ce que** le billet électronique stocké sur le terminal mobile (B) de l'utilisateur est activé avant la vérification par le terminal mobile (K) du contrôleur au moyen de l'activateur de billet (12) par ajout d'indications d'horaires, de lieu et/ou de dates.

2. Procédé selon la revendication 1, **caractérisé en ce que** qu'au moyen d'un module de localisation, il est déterminé une localisation qui est stockée aussi bien sur le terminal mobile (K) du contrôleur et **en ce que** la localisation stockée du terminal mobile (K) du contrôleur est utilisée pour le contrôle du billet électronique stocké sur le terminal mobile (B) de l'utilisateur.

3. Procédé selon l'une des revendications 1 à 2, **caractérisé en ce que** le billet électronique est protégé au moyen d'un procédé cryptographique contre une modification non autorisée et/ou un accès non autorisé.

4. procédé selon l'un des revendications 1 à 3, **caractérisé en ce que** le billet électronique comprend une identification de sorte que le billet électronique ne peut être utilisé que sur un terminal mobile déterminable et/ou par une interface déterminable de communication en champ proche

5. Procédé selon l'une des revendications 1 à 4, **caractérisé en ce que** lors de la transmission du billet électronique au terminal mobile (B) de l'utilisateur, une somme d'argent est transmise depuis un compte de somme d'argent de l'utilisateur à un compte de somme d'argent d'un prestataire de service.

6. Système pour l'édition et pour la vérification automatisée de billets électroniques, un serveur de billet (1) comprenant une banque de données d'utilisateurs (2) pour le stockage de données d'utilisateur, les données d'utilisateur comprenant au moins une identification d'un terminal mobile (B) d'un utilisateur, le serveur de billets (1) comprenant une banque de données de services (3) pour le stockage de données de fourniture de services, le serveur de billets (1) comprenant des moyens pour l'édition d'un billet électronique et pour la transmission du billet électronique en fonction de l'identification du terminal mobile (B) de l'utilisateur à ce terminal mobile, le terminal mobile (B) de l'utilisateur comprenant des moyens pour le stockage d'un billet électronique, le billet électronique se basant sur des données d'utilisateur de la banque de données d'utilisateur (2) et/ou sur des données de fourniture de services de la banque de données de services (3), un terminal mobile (K) d'un contrôleur comprenant des moyens pour, le stockage d'une clé de contrôle électronique, la clé de contrôle électronique étant associée au billet électronique, le terminal mobile (K) du contrôleur comprenant des moyens pour la vérification du billet électronique, la vérification s'effectuant par transmission de données à une interface de communication en champ proche entre le terminal mobile (B) de l'utilisateur et le terminal mobile (K) du contrôleur ainsi qu'au moyen de la clé de contrôle électronique stockée sur le terminal mobile (K) du contrôleur, **caractérisé en ce qu'**un activateur de billet (12) comprend des moyens pour l'activation du billet électronique stocké sur le terminal mobile (B) de l'utilisateur au moyen d'insertion d'indications de dates, d'horaires, et/ou de lieu.

7. Système selon la revendication 6, **caractérisé en ce qu'**un module de localisation comprend des moyens pour la détermination d'une localisation, **en ce que** le terminal mobile (K) du contrôleur comprend des moyens pour le stockage de la localisation déterminée et **en ce que** le terminal mobile (K) du contrôleur comprend des moyens pour une vérification basée sur la localisation déterminée du billet électronique stocké sur le terminal mobile (B) de l'utilisateur.

8. Système selon l'un des revendications 6 à 7, **caractérisé en ce que** le système comprend des moyens basés sur des procédés cryptographiques pour la protection du billet électronique contre une modification et/ou un accès non autorisé.

9. Système selon l'un des revendications 6 à 7, **caractérisé en ce que** le système comprend des moyens basés sur une identification de sorte que le billet électronique ne peut être utilisé que sur un terminal mobile déterminable et/ou par une interface déterminable de communication en champ proche.

10. Système selon l'un des revendications 6 à 9, **caractérisé en ce que** le système comprend des moyens basés sur la transmission du billet électronique au terminal mobile (B) de l'utilisateur pour la transmission d'une somme d'argent depuis un compte numéraire de l'utilisateur à un compte numéraire d'un prestataire de service.
